# EUROPÄISCHE PATENTSCHRIFT

(11) **EP 0 709 391 B1**
(45) Veröffentlichungstag und Bekanntmachung des Hinweises auf die Patenterteilung: **27.12.2000**
(21) Anmeldenummer: 95112287.8
(22) Anmeldetag: 04.08.1995
(51) Int. Cl.: C07F 7/18

(54) **Verfahren zur Herstellung von Aminopropylalkoxysilanen in Gegenwart von geformten polymeren Rhodiumkomplex-Katalysatoren und deren Verwendung**
Process for the preparation of aminopropyl alkoxysilanes in the presence of catalysts containing rhodium complexes, and their use
Procédé de préparation d'aminopropylalkoxysilanes en présence de catalyseurs contenant des composés de rhodium et leur utilisation

(30) Priorität: 04.10.1994 DE 4435390
(43) Veröffentlichungstag der Anmeldung: 01.05.1996
(73) Patentinhaber: Degussa-Hüls Aktiengesellschaft, 60287 Frankfurt am Main (DE)
(72) Erfinder: Monkiewicz, Jaroslaw, Dr., D-79618 Rheinfelden (DE); Frings, Albert, Dr., D-79618 Rheinfelden (DE); Horn, Michael, Dr., D-79618 Rheinfelden (DE); Kötzsch, Hans-Joachim, Dr., D-79618 Rheinfelden (DE); Kropfgans, Frank, Dr., D-79618 Rheinfelden (DE); Seiler, Claus-Dietrich, Dr., D-79618 Rheinfelden (DE); Srebny, Hans-Günther, Dr., D-48249 Dülmen (DE); Standke, Burkhard, Dr., D-79540 Lörrach (DE)

(56) Entgegenhaltungen:
- EP-A- 0 302 672
- EP-A- 0 321 174
- DD-A- 100 267
- FR-A- 2 189 119
- US-A- 4 556 722
- US-A- 4 927 949
- CHEMICAL ABSTRACTS, vol. 109, no. 11, 12.September 1988 Columbus, Ohio, US; abstract no. 93120w, MARCINIEC, B. ET AL. 'CATALYSIS OF HYDROSILYLATION. PART XIV. AMINOORGANOSILOXANE-SILICATE-SUPPORTED RHODIUM COMPLEXES AS CATALYSTS FOR HYDROSILYLATION OF ALKENES AND VINYLSILANES' & J. MOL. CATAL., Bd. 42, Nr. 2, 1987 Seiten 195-203,

## Beschreibung

Die Erfindung betrifft ein Verfahren zur Herstellung von Aminopropylalkoxysilanen der allgemeinen Formel

R²R³NCH₂CHR⁴CH₂Si(OR)₃₋ₙ(R¹)ₙ (I)

durch Umsetzung von Hydrogensilanen der allgemeinen Formel

HSi(OR)₃₋ₙ(R¹)ₙ (II)

mit einem Amin der allgemeinen Formel

R²R³NCH₂CR⁴=CH₂ (III),

wobei R und R¹ Alkylreste mit 1 bis 8 C-Atomen sind sowie n gleich 0 oder 1 oder 2 ist und R² und R³ Wasserstoff, Alkylreste mit 1 bis 8 C-Atomen und/oder ω-Alkenylreste mit 3 bis 8 C-Atomen und R⁴ Wasserstoff oder Alkylreste mit 1 bis 8 C-Atomen sind, in Gegenwart eines Rhodiumkomplex-Katalysators mit Organophosphor-Liganden sowie die Verwendung geformter polymerer Rhodiumkomplex-Katalysatoren.

Aus der Reihe der Aminoalkylalkoxysilane findet insbesondere das γ-Aminopropyltriethoxysilan in großem Umfang industrielle Anwendungen, so z. B. bei der Herstellung von Glasfasern.

Die Synthese von Aminopropylalkoxysilanen aus Allylamin und Hydrogensilanen erfolgt nach bekannten Methoden in Gegenwart homogen-katalysierter Systeme. Solche für die Durchführung der Reaktion üblicherweise eingesetzten, in organischen Lösungsmitteln löslichen Komplex-Katalysatoren basieren auf Verbindungen der Übergangsmetallelemente Kobalt, Platin, Rhodium und Ruthenium. Das anfallende Reaktionsprodukt enthält ein Regioisomerengemisch von γ- und β-Aminopropylalkoxysilanen.

EP-PS 0 196 639 lehrt ein Verfahren zur Herstellung von Aminopropylalkoxysilanen durch Umsetzung eines Hydrogensilans mit einem Allylamin in Gegenwart eines chlorfreien Rhodiumtriorganophosphor-Komplexes. Nach diesem homogen-katalysierten Verfahren sind Ausbeuten an Aminopropylalkoxysilanen von rund 60 bis 75 % und Regioisomerenverhältnisse mit γ-Isomer : β-Isomer von 6 bis 59 : 1 zu erhalten.

Solche leicht löslichen Rhodiumorganophosphor-Komplexe, eingesetzt als Homogenkatalysatoren für die Herstellung von Aminopropylalkoxysilanen, weisen zwar eine hohe Anfangsaktivität und Selektivität auf, besitzen aber nach erfolgter Umsetzung und der destillativen Abtrennung der Aminosilane nicht mehr die erforderliche Aktivität für einen erneuten Einsatz unter wirtschaftlichen Gesichtspunkten. Ursache für den raschen Aktivitätsrückgang ist das Abdissoziieren von Liganden aus dem Metallkomplex, oft schon nach kurzer Reaktionszeit. Für den Erhalt der Aktivität müssen beträchtliche Überschußmengen der entsprechenden Phosphorliganden im Reaktionsmedium angewandt werden.

Andere lösliche Komplexe aus der VIII. Nebengruppe des periodischen Systems der Elemente haben aufgrund deutlich geringerer Aktivität und Selektivität für die Hydrosilylierung von Allylaminen keine wirtschaftliche Bedeutung erlangt.

Ein großes Problem homogen-katalysierter Verfahren ist die möglichst quantitative Wiedergewinnung der eingesetzten teuren oder auch umweltrelevanten Übergangsmetalle. Die Wiedergewinnung dieser Metalle gelingt oft nur durch großen verfahrenstechnischen Aufwand, ansonsten ist von erheblichen Metallverlusten auszugehen. Solche Faktoren beeinflussen die Wirtschaftlichkeit und Akzeptanz eines Verfahrens und der Produkte erheblich.

Außerdem sind geformte polymere Komplex-Katalysatoren u. a. der Elemente Fe, Co, Ni, Ru, Rh, Pd, Pt, Os sowie Ir bekannt. Diese Elemente sind miteinander über phosphorhaltige Organosilane als Liganden verbrückt, wobei die Liganden an das jeweilige Zentralatom über bindungsstarke Phosphoratome koordinativ gebunden sind. Die geformten polymeren, insbesondere kugelförmigen Rhodiumkomplex-Katalysatoren mit Organosiloxandiphenylphosphin- oder Organosiloxanmonophenylphosphin-Liganden werden nach einem bekannten Verfahren hergestellt. Im Unterschied zu den SiO₂-gebundenen, heterogenen Katalysatoren werden diese nicht über ein nachträgliches Auftragen des Übergangsmetalls auf den Träger, sondern durch eine direkte Kondensation der entsprechenden Übergangsmetallkomplexe, mit z. B. Tetraethoxysilan und Aminosilanen, mit sich anschließender Hydrolyse synthetisiert. Solche geformten polymeren Komplex-Katalysatoren sind ausführlich in der DE-PS 40 35 032 und DE-PS 40 35 033 beschrieben, wobei diese geformten polymeren Komplex-Katalysatoren für die Durchführung von Hydroformulierungs-, Hydrierungs-, Oligomerisierungs-, Carbonylierungs-, Hydrosilylierungs-, Carboxymethylierungs-, Isomerisierungsreaktionen sowie für Reaktionen von CO oder CO₂ mit H₂ verwendbar sind.

Der Erfindung liegt die Aufgabe zugrunde, ein wirtschaftlicheres Verfahren zur Herstellung von Aminopropylalkoxysilanen zu entwickeln, bei dem sich der eingesetzte Rhodiumkomplex-Katalysator auf einfache Weise wiedergewinnen läßt.

Es wurde nun überraschenderweise gefunden, daß man Aminopropylalkoxysilane hervorragend in Gegenwart eines geformten polymeren Rhodiumkomplex-Katalysators mit Organosiloxanmonophenylphosphin-Liganden besonders wirtschaftlich herstellen kann, wobei der Katalysator sich auf ganz besonders einfache und wirtschaftliche Weise aus dem Reaktions- bzw. Produktgemisch wieder zurückgewinnen läßt. Von den zahlreichen geformten Übergangsmetallkomplex-Katalysatoren, welche die Elemente Pd, Pt, Ni, Co, Fe, Ir, Os, Ru und/oder Rh als Zentralatome enthalten und unterschiedliche Phosphor-Liganden aufweisen, erwies sich gerade der geformte polymere Rhodiumkomplex-Katalysator mit Organosiloxanmonophenylphosphin-Liganden als besonders vorteilhaft. So stellt sich im erfindungsgemäßen Verfahren bei gleichzeitig hohen Ausbeuten auch das Regioisomeren-Verhältnis zugunsten des bevorzugten γ-Aminopropylalkoxysilanisomeren ein.

Gegenstand der vorliegenden Erfindung ist daher ein Verfahren zur Herstellung von Aminopropylalkoxysilanen der allgemeinen Formel

R²R³NCH₂CHR⁴CH₂Si(OR)₃₋ₙ(R¹)ₙ (I)

durch Umsetzung von Hydrogensilanen der allgemeinen Formel

HSi(OR)₃₋ₙ(R¹)ₙ (II)

mit einem Amin der allgemeinen Formel

R²R³NCH₂CR⁴=CH₂ (III),

wobei R und R¹ Alkylreste mit 1 bis 8 C-Atomen sind sowie n gleich 0 oder 1 oder 2 ist und
R² und R³ Wasserstoff, Alkylreste mit 1 bis 8 C-Atomen und/oder
ω-Alkenylreste mit 3 bis 8 C-Atomen und
R⁴ Wasserstoff oder Alkylreste mit 1 bis 8 C-Atomen sind,
in Gegenwart eines Rhodiumkomplex-Katalysators mit Organophosphor-Liganden, das dadurch gekennzeichnet ist, daß die Umsetzung in Gegenwart eines geformten polymeren Rhodiumkomplex-Katalysators mit Organosiloxanmonophenylphosphin-Liganden durchgeführt wird.

Des weiteren ist Gegenstand der vorliegenden Erfindung die Verwendung geformter polymerer Rhodiumkomplex-Katalysatoren mit Organosiloxanmonophenylphosphin-Liganden für die erfindungsgemäße Herstellung von Aminopropylalkoxysilanen.

Das erfindungsgemäße Verfahren kann sowohl diskontinuierlich als auch kontinuierlich durchgeführt werden.

Die diskontinuierliche Verfahrensweise kann auf verschiedenen Wegen erfolgen. So kann der geformte polymere Rhodiumkomplex-Katalysator zusammen mit Hydrogensilan in einem Reaktionsgefäß (Rührkessel, Stahlreaktor) vorgelegt und die Aminkomponente der Suspension zugegeben werden, es kann auch in umgekehrter Reihenfolge verfahren werden. Man kann auch so vorgehen, daß beide Reaktanden zusammen vorgelegt, der Katalysator zugesetzt, ggf. unter Rühren dispergiert und anschließend das Gemisch auf Reaktionstemperatur gebracht wird. Das erfindungsgemäße Verfahren erfordert keine besonderen Maßnahmen bezüglich der Verwendung von Schutzgasatmosphäre, z. B. um die Aktivität des Katalysators aufrechtzuerhalten.

Bei Anwendung der diskontinuierlichen Verfahrensweise nehmen die Reaktionszeiten mit steigender Katalysator-Konzentration ab und liegen in Zeitbereichen von 24 Stunden bis 10 Minuten. Die bei der Umsetzung angewandte Rhodiumkonzentration, bezogen auf die Menge der eingesetzten Hydrogensilankomponente (II) beträgt vorzugsweise 50 bis 1 000 Gew.-ppm und besonders vorzugsweise 100 bis 400 Gew.-ppm.

Der geformte polymere Rhodiumkomplex-Katalysator wird vorzugsweise mit einer Korngröße von 0,05 bis 0,6 mm, besonders vorzugsweise mit einer Korngröße von 0,1 bis 0,3 mm, für das erfindungsgemäße Verfahren eingesetzt. Die Korngröße des geformten polymeren Rhodiumkomplex-Katalysators kann z. B. durch Sieben oder mit Hilfe eines Sichters oder auch durch Abmischen von einzelnen Kornfraktionen eingestellt werden.

Die Umsetzung von Hydrogensilanen (II) mit einem Amin (III) in Gegenwart eines geformten polymeren Rhodiumkomplex-Katalysators mit Organosiloxanmonophenylphosphin-Liganden erfolgt vorzugsweise bei Temperaturen von 90 bis 180 °C, besonders vorzugsweise bei Temperaturen von 110 bis 150 °C.

Als Hydrogensilan (II) wird bevorzugt ein Trialkoxysilan, besonders bevorzugt ein Triethoxysilan, eingesetzt. Als Amin (III) setzt man vorzugsweise ein Allylamin ein.

Der geformte polymere Rhodiumkomplex-Katalysator wird bevorzugt mit einem Rhodium-Gehalt von 0,1 bis 3,0 Gew.-% eingesetzt, besonders bevorzugt wird ein geformter polymerer Rhodiumkomplex-Katalysator mit einem Rhodium-Gehalt von 0,5 bis 1,5 Gew.-% eingesetzt.

Bei einigen Varianten des erfindungsgemäßen Verfahrens ist die Anwendung von Drücken bis 40 bar günstig.

Der geformte polymere Rhodiumkomplex-Katalysator kann nach erfolgter Umsetzung leicht abgetrennt werden, z. B. durch Filtration oder durch Dekantieren. Man kann aber auch zunächst das Reaktionsprodukt durch Abdestillieren aus dem Reaktionsgemisch entfernen. Der geformte polymere Rhodiumkomplex-Katalysator kann für das erfindungsgemäße Verfahren nach einer erfolgten Umsetzung ohne signifikanten Aktivitätsverlust erneut eingesetzt werden.

Das nach dem erfindungsgemäßen Verfahren erhaltene Produkt setzt sich im wesentlichen aus einem Gemisch von γ-Aminopropylalkoxysilanen und β-Aminopropylalkoxysilanen zusammen, das γ-Isomere liegt hierbei in ungewöhnlich hohem Maße vor. Das γ-/β-Verhältnis im Rohprodukt erlaubt, daß das γ-Isomere mit nur geringem Destillationsaufwand in einer für weitere Anwendungen erforderlichen Reinheit erhalten werden kann.

Die kontinuierliche Durchführung des erfindungsgemäßen Verfahrens kann in einem Rohrreaktor, der im Durchfluß, in Kreislauffahrweise oder im Durchfluß mit Teilstromrückführung zu betreiben ist, erfolgen.
Der geformte polymere Rhodiumkomplex-Katalysator befindet sich dabei im Katalysatorbett des Reaktors, z. B. als lose Schüttung. Der Katalysator kann auch in kleine Säckchen gefüllt sein, wobei solche Säckchen aus einem Gewebe, z. B. Drahtgewebe oder Geflecht aus Metall, mit entsprechender Maschenweite bestehen können. Die Säckchen sind dann ihrerseits einzeln oder zusammenhängend in den Rohrreaktor einzubringen und zu fixieren.

Solche einzeln oder zusammenhängend angeordneten Säckchen, gefüllt mit geformtem polymerem Metallkomplex-Katalysator können auch für die oben beschriebene diskontinuierliche Fahrweise eingesetzt werden. Dies vereinfacht zusätzlich die Rückgewinnung des Katalysators aus dem Reaktionsgemisch.

Das erfindungsgemäße Verfahren zeichnet sich auch dadurch aus, daß die Bildung unerwünschter Nebenprodukte zurückgedrängt wird.

Ein großer Vorteil des erfindungsgemäßen Verfahrens besteht auch darin, daß die Umsetzung lösungsmittelfrei durchgeführt werden kann. Sollte es dennoch erforderlich sein, so kann aber auch die Umsetzung in Gegenwart eines gegenüber den Reaktanden inerten organischen Lösungsmittels oder Lösungsmittelgemisches durchgeführt werden. Als geeignete Lösungsmittel bieten sich z. B. Xylol sowie Toluol an.

Ganz besonders überraschend ist es, daß das erfindungsgemäße Verfahren sich neben hoher Chemo- und Regioselektivität auch durch kurze Reaktionszeiten und hohe Ausbeuten auszeichnet.

Die Erfindung wird durch die nachfolgenden Beispiele näher erläutert:

### Beispiele

### Beispiel 1

In einem 100 ml Dreihalskolben, versehen mit Magnetrührer, Kühler, Thermometer und Tropftrichter, werden 16,4 g (0,1 mol) Triethoxysilan vorgelegt. Danach werden 656 mg DELOXAN HK-I, ein Verkaufsprodukt der Fa. Degussa, zugegeben. DELOXAN HK-I ist ein geformter polymerer Rhodiumkomplex-Katalysator mit Organosiloxanmonophenylphosphin-Liganden. Der Rh-Gehalt des hier eingesetzten Katalysatormaterials beträgt 1 Gew.-%, das entspricht einer Rh-Konzentration von 400 Gew.-ppm, bezogen auf die eingesetzte Triethoxysilanmenge. Die Korngröße des hier eingesetzten Katalysators ist auf 0,1 bis 0,3 mm eingestellt, dazu wurde das handelsübliche Katalysatormaterial DELOXAN HK-I vor seiner Verwendung durch Sieben fraktioniert. Der Kolbeninhalt wird unter Rühren auf 135 °C erwärmt. Bei Erreichen dieser Temperatur werden 5,7 g (0,1 mol) Allylamin so zugetropft, daß die Temperatur nicht unter 130 °C abfällt. Nach Beendigung der Aminzugabe wird das Reaktionsgemisch noch ca. 30 min bei 130 °C gehalten. Nach dem Abkühlen des Kolbeninhalts wird der Katalysator durch Filtration vom Reaktionsprodukt abgetrennt. Der nach dem Gaschromatogramm berechnete Umsatz beträgt für Allylamin rund 97 % und für Triethoxysilan > 99 %. Die Selektivität der Aminopropyltriethoxysilan-Bildung (γ+β-Produkt) liegt bei 87,5 %. Das molare Verhältnis der γ-/β-Regioisomeren beträgt 66 : 1.

### Beispiel 2

In einem 100 ml Dreihalskolben, versehen mit Magnetrührer, Kühler, Thermometer und Tropftrichter, werden 16,4 g (0,1 mol) Triethoxysilan vorgelegt. Danach werden 656 mg DELOXAN HK-I mit einem Rh-Gehalt von 1 Gew.-% zugegeben, das entspricht einer Rh-Konzentration von 400 Gew.-ppm, bezogen auf die eingesetzte Triethoxysilanmenge. Die Korngröße des hier eingesetzten Katalysatormaterials beträgt 0,1 - 0,3 mm, wie zuvor in Beispiel 1 beschrieben. Der Kolbeninhalt wird unter Rühren auf 135 °C erwärmt. Bei Erreichen dieser Temperatur werden 6,28 g (0,11 mol) Allylamin so zugetropft, daß die Temperatur nicht unter 130 °C abfällt. Nach Beendigung der Aminzugabe wird das Reaktionsgemisch noch ca. 30 min bei 130 °C gehalten. Nach dem Abkühlen des Kolbeninhalts wird das Rohprodukt unter vermindertem Druck abdestilliert. Der nach dem Gaschromatogramm berechnete Umsatz beträgt für Allylamin rund 95 % und für Triethoxysilan > 99 %. Die Selektivität der Aminopropyltriethoxysilan-Bildung (γ+β-Produkt) liegt bei 84,5 %. Das molare Verhältnis der γ-/β-Regioisomeren beträgt 65 : 1.

### Beispiele 3 bis 9

Es wird verfahren wie im Beispiel 1 beschrieben, jedoch wird nach jedem Abfiltrieren des Katalysators vom Rohprodukt derselbe im nachfolgenden Versuch erneut eingesetzt. Die Ergebnisse der sieben auf diese Art hintereinander durchgeführten Versuche sind in Tabelle 1 dargestellt, die Reaktionszeit ist hier auf die jeweiligen Versuche bezogen.

**Tabelle 1**

| Reaktion von Triethoxysilan (TEOS) mit Allylamin (molares Verhältnis 1 : 1) in Gegenwart des in Suspension vorgelegten DELOXAN HK-I (Rh-Gehalt 1 Gew.-%, Korngröße 0,1 - 0,3 mm) bei 135 °C | | | | | |
|---|---|---|---|---|---|
| Beisp.-Nr. | Reaktionszeit (min) | Umsatz (%) | | Selektivität (%) | |
| | | TEOS | Amin | γ-Produkt | β-Produkt |
| 3 | 40 | 98 | 98 | 87 | 1,5 |
| 4 | 55 | 95 | 96 | 86 | 1,6 |
| 5 | 70 | 92 | 97 | 83 | 1,5 |
| 6 | 90 | 90 | 93 | 82 | 1,6 |
| 7 | 110 | 86 | 91 | 81 | 1,5 |
| 8 | 190 | 90 | 94 | 80 | 1,4 |
| 9 | 225 | 78 | 88 | 79 | 1,4 |

### Beispiele 10 bis 16

Es wird verfahren wie im Beispiel 2 beschrieben, jedoch wird nach jedem Abdestillieren des Produktes aus dem Reaktionsgemisch der Katalysator im nachfolgenden Versuch erneut verwendet. Die Ergebnisse der sieben auf diese Weise hintereinander durchgeführten Versuche sind in Tabelle 2 dargestellt, die Reaktionszeit ist auch hier auf die jeweiligen Versuche bezogen.

**Tabelle 2**

| Reaktion von Triethoxysilan (TEOS) mit Allylamin (molares Verhältnis 1 : 1,1) in Gegenwart des in Suspension vorgelegten DELOXAN HK-I (Rh-Gehalt 1 Gew.-%, Korngröße 0,1 bis 0,3 mm) bei 135 °C | | | | | |
|---|---|---|---|---|---|
| Beisp.-Nr. | Reaktionszeit (min) | Umsatz (%) | | Selektivität (%) | |
| | | TEOS | Amin | γ-Produkt | β-Produkt |
| 10 | 60 | 99 | 95 | 85 | 1,4 |
| 11 | 75 | 99 | 95 | 87 | 1,6 |
| 12 | 90 | 99 | 95 | 85 | 1,7 |
| 13 | 115 | 97 | 94 | 84 | 1,9 |
| 14 | 135 | 90 | 90 | 79 | 1,9 |
| 15 | 190 | 94 | 94 | 74 | 1,8 |
| 16 | 195 | 83 | 95 | 72 | 1,7 |

### Beispiel 17

Es wird verfahren wie im Beispiel 1 beschrieben, jedoch wird anstelle von Triethoxysilan Allylamin zusammen mit dem Katalysator in einem geschlossenen Stahlreaktor vorgelegt und auf 140 °C aufgeheizt. Anschließend wird das Triethoxysilan zudosiert. Die Reaktionszeit beläuft sich auf 2 Stunden. Der nach dem Gaschromatogramm berechnete Umsatz beträgt für Allylamin 96 % und für Triethoxysilan > 99 %. Die Selektivität der Aminopropyltriethoxysilan-Bildung (γ+β-Produkt) liegt bei 82,5 %. Das molare Verhältnis der γ-/β-Regioisomeren beträgt 55 : 1.

### Beispiel 18

Es wird verfahren wie im Beispiel 1 beschrieben, jedoch werden anstelle von 400 Gew.-ppm Rhodium nur 200 Gew.-ppm Rhodium, bezogen auf die Silankomponente, eingesetzt, entsprechend 328 mg DELOXAN HK-I. Die Reaktionszeit beläuft sich auf 2 Stunden. Der nach dem Gaschromatogramm berechnete Umsatz beträgt für Allylamin 99 % und für Triethoxysilan > 99 %. Die Selektivität der Aminopropyltriethoxysilan-Bildung (γ+β-Produkt) liegt bei 86,3 %. Das molare Verhältnis der γ-/β-Regioisomeren beträgt 65 : 1.

### Beispiel 19

Es wird verfahren wie im Beispiel 1 beschrieben, jedoch werden anstelle von 400 Gew.-ppm Rhodium nur 100 Gew.-ppm Rhodium, bezogen auf die Silankomponente, eingesetzt, entsprechend 164 mg DELOXAN HK-I. Die Reaktionszeit wird auf 3 Stunden ausgedehnt. Der nach dem Gaschromatogramm berechnete Umsatz beträgt für Allylamin 96 % und für Triethoxysilan 94 %. Die Selektivität der Aminopropyltriethoxysilan-Bildung (γ+β-Produkt) liegt bei 88,5 %. Das molare Verhältnis der γ-/β-Regioisomeren beträgt 59 : 1.

### Beispiel 20

Es wird verfahren wie im Beispiel 1 angegeben. Anstelle von Allylamin werden 5,18 g (0,055 mol) Diallylamin eingesetzt. Der nach dem Gaschromatogramm berechnete Umsatz beträgt für Diallylamin und Triethoxysilan 98 %. Die Selektivität der Bis-(3-triethoxysilylpropyl)amin-Bildung liegt bei 47 %.

### Beispiel 21

In einen 100 ml Dreihalskolben, versehen mit Magnetrührer, Kühler, Thermometer und Tropftrichter, werden 13,4 g (0,1 mol) Methyldiethoxysilan vorgelegt. Danach werden 268 mg DELOXAN HK-I zugegeben (Rh-Gehalt 1 Gew.-%, Korngröße 0,1 - 0,3 mm; Rh-Konzentration 200 Gew.-ppm, bezogen auf die Methyldiethoxysilanmenge). Der Kolbeninhalt wird auf rund 100 °C erwärmt. Bei Erreichen dieser Temperatur werden 5,7 g (0,1 mol) Allylamin innerhalb 1 Stunde zugetropft. Nach Beendigung der Aminzugabe wird die Reaktionsmischung 18 Stunden bei 130 °C gehalten. Nach dem Abkühlen des Kolbeninhaltes wird der Katalysator durch Filtration vom Rohprodukt abgetrennt. Der nach dem Gaschromatogramm berechnete Umsatz beträgt für Allylamin 96 % und für Methyldiethoxysilan > 94 %. Die Selektivität der Aminopropylmethyldiethoxysilan-Bildung (γ+β-Produkt) liegt bei 63,4 %. Das molare Verhältnis der γ-/β-Regioisomeren beträgt 45 : 1.

### Beispiel 22

In einen 100 ml Stahlreaktor, versehen mit Magnetrührer und Manometer, werden 13,4 g (0,1 mol) Methyldiethoxysilan, 5,7 g (0,1 mol) Allylamin und 536 mg DELOXAN HK-I zugegeben (Rh-Gehalt 1 Gew.-%, Korngröße 0,1 - 0,3 mm; Rh-Konzentration von 400 Gew.-ppm, bezogen auf die eingesetzte Methyldiethoxysilanmenge). Der Reaktor wird unter Rühren auf ca. 130 °C erhitzt. Dabei steigt der Innendruck bis auf 6 bar an. Nach 45 Minuten Reaktionszeit wird der Reaktor auf Raumtemperatur abgekühlt und der Katalysator durch Filtration abgetrennt. Der nach dem Gaschromatogramm berechnete Umsatz beträgt für Allylamin 100 % und für Methyldiethoxysilan > 95 %. Die Selektivität der Aminopropylmethyldiethoxysilan-Bildung (γ+β-Produkt) liegt bei 66,3 %. Das molare Verhältnis der γ-/β-Regioisomeren beträgt 60 : 1.

### Beispiel 23

In einen 100 ml Stahlreaktor, versehen mit Magnetrührer und Manometer, werden 12,2 g (0,1 mol) Trimethoxysilan, 5,7 g (0,1 mol) Allylamin und 732 mg DELOXAN HK-I vorgelegt (Rh-Gehalt 1 Gew.-%, Korngröße 0,1 - 0,3 mm; Rh-Konzentration 600 Gew.-ppm, bezogen auf die Trimethoxysilanmenge). Der Reaktor wird unter Rühren auf 135 °C erhitzt. Dabei steigt der Innendruck auf 6 bar an. Nach 6 Stunden Reaktionszeit wird der Reaktor auf Raumtemperatur abgekühlt und das Rohprodukt durch Filtration vom Katalysator abgetrennt. Der nach dem Gaschromatogramm berechnete Umsatz beträgt für Allylamin 88 % und für Trimethoxysilan > 99 %. Die Selektivität der Aminopropyltrimethoxysilan-Bildung (γ+β-Produkt) liegt bei 50,2 %. Das molare Verhältnis der γ-/β-Regioisomeren beträgt 42 : 1.

## Patentansprüche

1. Verfahren zur Herstellung von Aminopropylalkoxysilanen der allgemeinen Formel
R²R³NCH₂CHR⁴CH₂Si(OR)₃₋ₙ(R¹)ₙ (I)
durch Umsetzung von Hydrogensilanen der allgemeinen Formel
HSi(OR)₃₋ₙ(R¹)ₙ (II)
mit einem Amin der allgemeinen Formel
R²R³NCH₂CR⁴=CH₂ (III),
wobei R und R¹ Alkylreste mit 1 bis 8 C-Atomen sind sowie n gleich 0 oder 1 oder 2 ist und
R² und R³ Wasserstoff, Alkylreste mit 1 bis 8 C-Atomen und/oder
ω-Alkenylreste mit 3 bis 8 C-Atomen und
R⁴ Wasserstoff oder Alkylreste mit 1 bis 8 C-Atomen sind,
in Gegenwart eines Rhodiumkomplex-Katalysators mit Organophosphor-Liganden,
dadurch gekennzeichnet,
daß die Umsetzung in Gegenwart eines geformten polymeren Rhodiumkomplex-Katalysators mit Organosiloxanmanophenylphosphin-Liganden durchgeführt wird.

2. Verfahren nach Anspruch 1,
dadurch gekennzeichnet,
daß der geformte polymere Rhodiumkomplex-Katalysator mit einer Korngröße von 0,05 bis 0,6 mm eingesetzt wird.

3. Verfahren nach den Ansprüchen 1 und 2,
dadurch gekennzeichnet,
daß der geformte polymere Rhodiumkomplex-Katalysator mit einem Rhodium-Gehalt von 0,1 bis 3,0 Gew.-% eingesetzt wird.

4. Verfahren nach den Ansprüchen 1 bis 3,
dadurch gekennzeichnet,
daß die bei der Umsetzung angewandte Rhodium-Konzentration, bezogen auf die Menge der eingesetzten Hydrogensilankomponente (II), 50 bis 1 000 Gew.-ppm beträgt.

5. Verfahren nach den Ansprüchen 1 bis 4,
dadurch gekennzeichnet,
daß die Umsetzung bei Temperaturen von 90 bis 180 °C erfolgt.

6. Verfahren nach den Ansprüchen 1 bis 5,
dadurch gekennzeichnet,
daß als Hydrogensilan (II) ein Trialkoxysilan eingesetzt wird.

7. Verfahren nach den Ansprüchen 1 bis 6,
dadurch gekennzeichnet,
daß als Amin (III) ein Allylamin eingesetzt wird.

8. Verfahren nach den Ansprüchen 1 bis 7,
dadurch gekennzeichnet,
daß die Umsetzung lösungsmittelfrei durchgeführt wird.

9. Verfahren nach den Ansprüchen 1 bis 8,
dadurch gekennzeichnet,
daß die Umsetzung in Gegenwart eines gegenüber den Reaktanden inerten organischen Lösungsmittels oder Lösungsmittelgemisches durchgeführt wird.

10. Verwendung geformter polymerer Rhodiumkomplex-Katalysatoren mit Organosiloxanmanophenylphosphin-Liganden für die Herstellung von Aminopropylalkoxysilanen nach einem der Ansprüche 1-9.

## Claims

1. A process for preparing aminopropylalkoxysilanes of the general formula
R²R³NCH₂CHR⁴CH₂Si(OR)₃₋ₙ(R¹)ₙ (I)
by reaction of hydrogensilanes of the general formula
HSi(OR)₃₋ₙ(R¹)ₙ (II)
with an amine of the general formula
R²R³NCH₂CR⁴=CH₂ (III),
where R and R¹ are alkyl radicals having from 1 to 8 carbon atoms and n is equal to 0 or 1 or 2 and
R² and R³ are hydrogen, alkyl radicals having from 1 to 8 carbon atoms and/or ω-alkenyl radicals having from 3 to 8 carbon atoms and
R⁴ is hydrogen or an alkyl radical having from 1 to 8 carbon atoms,
in the presence of a rhodium complex catalyst containing organophosphorus ligands,
characterized in that the reaction is carried out in the presence of a shaped polymeric rhodium complex catalyst containing organosiloxanemonophenylphosphine ligands.

2. A process according to claim 1,
characterized in that the shaped polymeric rhodium complex catalyst used has a particle size of from 0.05 to 0.6 mm.

3. A process according to either of claims 1 and 2,
characterized in that the shaped polymeric rhodium complex catalyst used has a rhodium content of from 0.1 to 3.0% by weight.

4. A process according to any of claims 1 to 3,
characterized in that the rhodium concentration used in the reaction is from 50 to 1000 ppm by weight, based on the amount of the hydrogensilane component (II) used.

5. A process according to any of claims 1 to 4,
characterized in that the reaction is carried out at temperatures of from 90 to 180°C.

6. A process according to any of claims 1 to 5,
characterized in that a trialkoxysilane is used as hydrogensilane (II).

7. A process according to any of claims 1 to 6,
characterized in that an allylamine is used as amine (III).

8. A process according to any of claims 1 to 7,
characterized in that the reaction is carried out in the absence of solvent.

9. A process according to any of claims 1 to 8,
characterized in that the reaction is carried out in the presence of an organic solvent or solvent mixture which is inert to the reactants.

10. The use of shaped polymer rhodium complex catalysts containing organosiloxanemonophenylphospine ligands for the preparation of aminopropylalkoxysilanes according to any one of claims 1-9.

## Revendications

1. Procédé de production d'aminopropylalkoxysilanes de formule générale :
R²R³NCH₂CHR⁴CH₂Si(OR)_{3 n}(R¹)ₙ (I)
par réaction d'hydrogénosilanes de formule générale :
HSi(OR)₃₋ₙ(R¹)ₙ (II)
avec une amine de formule générale :
R²R³NCH₂CR⁴=CH₂ (III)
dans laquelle R et R¹ sont des radicaux alkyle ayant de 1 à 8 atomes de carbone ainsi que n est égal à 0 ou 1 ou 2, et
R² et R³ sont de l'hydrogène, des radicaux alkyle ayant de 1 à 8 atomes de carbone et/ou des radicaux ω-alkénylés ayant de 3 à 8 atomes de carbone, et R⁴ est de l'hydrogène ou des radicaux alkyle ayant de 1 à 8 atomes de carbone, en présence d'un catalyseur à base d'un complexe de rhodium avec des ligands organophosphorés,
caractérisé en ce que
la réaction est effectuée en présence d'un catalyseur en complexe de rhodium polymère moulé avec des ligands organosiloxanemonophénylphosphine.

2. Procédé selon la revendication 1,
caractérisé en ce que
le catalyseur en complexe de rhodium polymère moulé, est mis en oeuvre avec une granulométrie de 0,05 à 0,6 mm.

3. Procédé selon les revendications 1 et 2,
caractérisé en ce que
le catalyseur en complexe de rhodium polymère moulé, est mis en oeuvre avec une teneur en rhodium allant de 0,1 à 3,0 % en poids.

4. Procédé selon l'une quelconque des revendications 1 à 3,
caractérisé en ce que
la concentration de rhodium utilisé pour la réaction, rapporté à la quantité de composant hydrogénosilane (II) mis en oeuvre, s'élève à 50 à 1000 ppm en poids.

5. Procédé selon l'une quelconque des revendications 1 à 4,
caractérisé en ce que
la réaction s'effectue à des températures allant de 90 à 180°C.

6. Procédé selon l'une quelconque des revendications 1 à 5,
caractérisé en ce qu'
on met en oeuvre comme hydrogénosilane (II) un trialkoxysilane.

7. Procédé selon l'une quelconque des revendications 1 à 6,
caractérisé en ce qu'
on met en oeuvre comme amine (III), une allylamine.

8. Procédé selon l'une quelconque des revendications 1 à 7,
caractérisé en ce que
la réaction est effectuée sans solvant.

9. Procédé selon l'une quelconque des revendications 1 à 8,
caractérisé en ce que
la réaction est effectuée en présence d'un solvant organique inerte vis-à-vis des réactifs, ou d'un mélange de solvants.

10. Utilisation de catalyseurs en complexe de rhodium polymère moulé ayant des ligands organosiloxanemonophénylphosphine, pour la production d'aminopropylalkoxysilanes, selon l'une quelconque des revendications 1 à 9.
